# EUROPEAN PATENT APPLICATION

(11) **EP 4 773 118 A1**
(43) Date of publication of application: **08.07.2026**
(21) Application number: 25226819.8
(22) Date of filing: 23.12.2025
(51) Int. Cl.: G08G 1/16, G06V 20/58, G06V 20/56, G08G 1/0962, B60Q 9/00

(54) **SYSTEMS AND METHODS FOR MONITORING TRAFFIC**

(30) Priority: 31.12.2024 US 202463740909 P; 04.12.2025 US 202519409152
(71) Applicant: Harman Becker Automotive Systems, Inc., Novi, MI 48377 (US)
(72) Inventor: LOEHL, Pascal, Chicago 60611 (US); LYON, David Gillet, Detroit 48208 (US); SUN, Haoliang Michael, Rochester Hills 48307 (US)
(74) Representative: Kraus & Lederer PartGmbB

(57) **Abstract**

A method including obtaining sensor data from one or more sensors of a sensor suite associated with a vehicle, the display of a visual overlay associated with an environment corresponding to a location of the vehicle, the determination of one or more potential hazards present within the environment, and highlighting the one or more potential hazards in the displayed visual overlay of the environment.

## Description

### FIELD

The present disclosure relates to the monitoring of traffic, and more particularly, to monitoring traffic in relation to a location of a vehicle.

### BACKGROUND

The statements in this section merely provide background information related to the present disclosure and may not constitute prior art.

Traditional three-dimensional surround visualizers provide an abstracted and downscaled representation of an outside world relative to a perspective of a vehicle. However, the representation of surrounding vehicles created by these surround visualizers is often inaccurate, such as considering every object of the outside world with the same level of importance. As a result, real hazards can be overlooked by the driver at least based on the simplified, animated depiction, provided by traditional three-dimensional surround visualizers.

The present disclosure addresses these and other issues related to monitoring traffic in relation to a location of the vehicle.

### SUMMARY

This section provides a general summary of the disclosure and is not a comprehensive disclosure of its full scope or all of its features.

The present disclosure provides a method comprising: obtaining sensor data from one or more sensors of a sensor suite associated with a vehicle; displaying, in response to obtaining the sensor data, a visual overlay of an environment corresponding to a location of the vehicle; determining, by a vehicle-side algorithm, one or more potential hazards present within the environment based on the sensor data; and highlighting, by the vehicle-side algorithm, the one or more potential hazards in the displayed visual overlay of the environment based on determining that there are one or more potential hazards present within the environment; wherein the one or more sensors include one or more LIDAR sensors, one or more radar sensors, one or more ultrasonic sensors, one or more thermal imaging sensors, one or more night vision sensors, or a combination thereof; further comprising: selecting a sensor of the one or more sensors to obtain the sensor data based on one or more environmental conditions associated with the location of the vehicle; further comprising: determining a priority of the one or more potential hazards based on a proximity of the one or more potential hazards from the location of the vehicle, a speed of the one or more potential hazards in relation to the location of the vehicle, or a combination thereof; wherein determining the priority of the one or more potential hazards further comprises: determining a likelihood of collision between the vehicle and the one or more potential hazards based on one or more tiers of distance-related thresholds or speed-related thresholds; wherein highlighting the one or more potential hazards in the displayed visual overlay of the environment is further based on the one or more potential hazards exceeding the one or more tiers of distance-related thresholds or speed-related thresholds; wherein a first tier of the one or more tiers of distance-related thresholds or speed-related thresholds corresponds to a first color and a second tier of the one or more tiers of distance-related thresholds or speed-related thresholds corresponds to a second color; and further comprising: transmitting one or more alerts in response to determining that the one or more potential hazards are present within the environment, wherein the one or more alerts include one or more visual alerts, one or more auditory alerts, one or more haptic alerts, or a combination thereof.

The present disclosure provides a system comprising: a processor; and a non-transitory computer-readable medium including instructions that are executable by the processor, wherein the instructions include: obtaining sensor data from one or more sensors of a sensor suite associated with a vehicle; displaying, in response to obtaining the sensor data, a visual overlay of an environment corresponding to a location of the vehicle; determining, by a vehicle-side algorithm, one or more potential hazards present within the environment based on the sensor data; and highlighting, by the vehicle-side algorithm, the one or more potential hazards in the displayed visual overlay of the environment based on determining that there are one or more potential hazards present within the environment; wherein the one or more sensors include one or more LIDAR sensors, one or more radar sensors, one or more ultrasonic sensors, one or more thermal imaging sensors, one or more night vision sensors, or a combination thereof; wherein the instructions further include: selecting a sensor of the one or more sensors to obtain the sensor data based on one or more environmental conditions associated with the location of the vehicle; wherein the instructions further include: determining a priority of the one or more potential hazards based on a proximity of the one or more potential hazards from the location of the vehicle, a speed of the one or more potential hazards in relation to the location of the vehicle, or a combination thereof; wherein determining the priority of the one or more potential hazards further includes: determining a likelihood of collision between the vehicle and the one or more potential hazards based on one or more tiers of distance-related thresholds or speed-related thresholds; wherein highlighting the one or more potential hazards in the displayed visual overlay of the environment is further based on the one or more potential hazards exceeding the one or more tiers of distance-related thresholds or speed-related thresholds; wherein a first tier of the one or more tiers of distance-related thresholds or speed-related thresholds corresponds to a first color and a second tier of the one or more tiers of distance-related thresholds or speed-related thresholds corresponds to a second color; wherein the instructions further include: and transmitting one or more alerts in response to determining that the one or more potential hazards are present within the environment, wherein the one or more alerts include one or more visual alerts, one or more auditory alerts, one or more haptic alerts, or a combination thereof.

The present disclosure provides a system comprising a processor; and a non-transitory computer-readable medium including instructions that are executable by the processor, wherein the instructions include: selecting a sensor of one or more sensors of a sensor suite associated with a vehicle based on one or more environmental conditions associated with a location of the vehicle; obtaining sensor data from the sensor; displaying, in response to obtaining the sensor data, a visual overlay of an environment corresponding to the location of the vehicle; determining, by a vehicle-side algorithm, one or more potential hazards present within the environment based on the sensor data; highlighting, by the vehicle-side algorithm, the one or more potential hazards in the displayed visual overlay of the environment based on determining that there are one or more potential hazards present within the environment; transmitting one or more alerts in response to determining that the one or more potential hazards are present within the environment, wherein the one or more alerts include one or more visual alerts, one or more auditory alerts, one or more haptic alerts, or a combination thereof; determining a priority of the one or more potential hazards based on a proximity of the one or more potential hazards from the location of the vehicle, a speed of the one or more potential hazards in relation to the location of the vehicle, or a combination thereof; wherein determining the priority of the one or more potential hazards further includes: determining a likelihood of collision between the vehicle and the one or more potential hazards based on one or more tiers of distance-related thresholds or speed-related thresholds; and/or wherein highlighting the one or more potential hazards in the displayed visual overlay of the environment is further based on the one or more potential hazards exceeding the one or more tiers of distance-related thresholds or speed-related thresholds.

### DRAWINGS

In order that the disclosure may be well understood, there will now be described various forms thereof, given by way of example, reference being made to the accompanying drawings, in which:
FIG. 1 is a schematic block diagram of an example vehicle configured to monitor traffic in accordance with one or more embodiments of the present disclosure;
FIG. 2 is a block diagram illustrating a sensor suite controller in accordance with one or more embodiments of the present disclosure;
FIG. 3 is a side diagrammatic view of a content display environment in accordance with one or more embodiments of the present disclosure;
FIG. 4 is a top diagrammatic view of the content display environment of FIG. 3 in accordance with one or more embodiments of the present disclosure;
FIG. 5 is an example projection utilizing the content display environment of FIGS. 3 and 4 in accordance with one or more embodiments of the present disclosure;
FIG. 6 is a flowchart illustrating an example method for monitoring traffic in relation to a location of the vehicle of FIG. 1 in accordance with one or more embodiments of the present disclosure; and
FIG. 7 is a block diagram illustrating an example computer system in accordance with one or more embodiments of the present disclosure.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. It should be understood that throughout the drawings, corresponding reference numerals indicate like or corresponding parts and features.

One or more embodiments of the present disclosure provide systems and methods for monitoring traffic in relation to a location of a vehicle. More specifically, the vehicle can include systems and methods for providing a dynamic street crossing feature that enhances pedestrian safety as well as driver awareness by dynamically adapting to real-time traffic and/or environmental conditions. The dynamic street crossing feature combines advanced visualization technologies with situational awareness systems to enhance safety and reduce accidents during street crossing in various embodiments.

In one or more embodiments, the dynamic street crossing feature provides a real-time, high-resolution visual overlay of a street crossing environment associated with a field of vision of a driver of the vehicle. The dynamic street crossing feature also highlights different hazards using one or more augmented reality cues. The dynamic street crossing feature further adapts a level of hazard highlighting based on real-time sensor inputs, such as speed and/or distance.

In one or more embodiments, the dynamic street crossing feature detects hidden objects (e.g., pedestrians, cyclists, animals, etc.) around or in proximity to the location of the vehicle using at least thermal imaging and light detection and ranging (LIDAR) sensors, even in adverse weather conditions. The dynamic street crossing feature highlights any hazards to the driver via a visual and/or auditory alert. In one or more embodiments, the dynamic street crossing feature displays a panoramic, immersive, view of a crossing area for passengers of the vehicle, which increases situational awareness. The dynamic street crossing feature also enables passengers of the vehicle to assist in identifying any potential hazards.

In general, the dynamic street crossing feature provides one or more advantages over traditional three-dimensional surround visualizers such as a real-time realistic image of an outside world corresponding to at least the field of vision of the driver of the vehicle. The provided real-time realistic image clearly highlights any dangers and/or adverse conditions surrounding the vehicle as these arise, effectively directing attention of the driver to any real-world hazards. In one or more examples, and by integrating certain information, such as critical information, directly into a view of the driver, a vehicle system minimizes the need for the driver to look at multiple displays and/or mirrors, which provides a more intuitive and less distracting driving experience. Additional advantages the dynamic street crossing feature provides over three-dimensional surround visualizers includes filtering and/or highlighting genuine hazards (e.g., more accurate highlighting of hazards) so that the driver can immediately notice any potential dangers in the environment corresponding to the location of the vehicle.

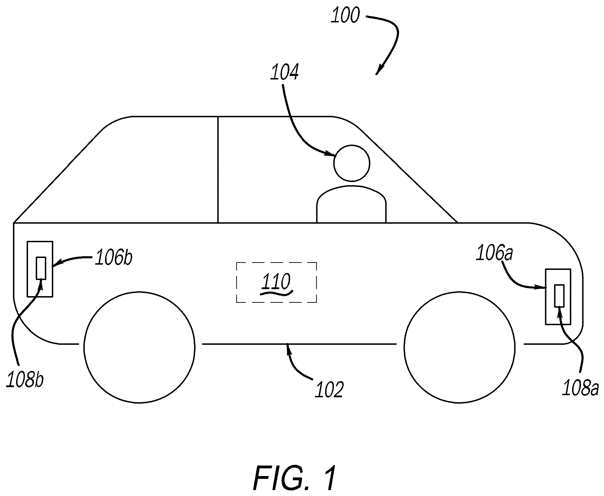

FIG. 1 illustrates a system 100 configured to implement one or more aspects of various embodiments. As shown, the system 100 generally depicts a vehicle 102 that includes, without limitation, a user 104 and a sensor suite 106 (e.g., a front sensor suite 106a and a back sensor suite 106b). In one or more examples, the sensor suite 106 is comprised of a plurality of sensors affixed to one or more bumpers of the vehicle 102, each of which can include, but is not limited to, one or more of cameras, LIDAR sensors, radio detection and ranging (radar) sensors, and/or ultrasonic sensors. The sensor suite 106 can include a sensor suite controller 108 (e.g., a front sensor suite controller 108a and a back sensor suite controller 108b) therein, and while the sensor suite controller 108 is depicted as internally disposed within the sensor suite 106, it is understood that the sensor suite controller 108 can be located anywhere in relation to the sensor suite 106. It is also understood that the vehicle 102 can include a single, and centrally located sensor suite controller 108, with which the sensor suite 106 can communicate. The vehicle 102 also includes a vehicle-side algorithm 110 that is configured to serve as a vehicle system enabled to facilitate one or more functionalities of each of the described other components of the vehicle 102 (the sensor suite 106 and/or the sensor suite controller 108), as is described herein.

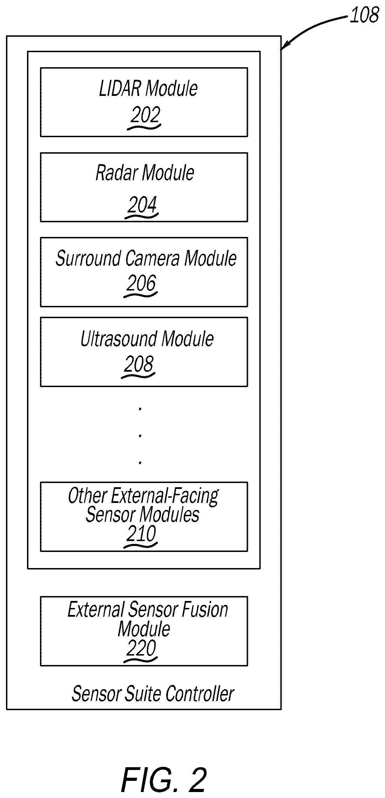

FIG. 2 illustrates a more detailed view of the sensor suite controller 108 of FIG. 1, according to various embodiments. The sensor suite controller 108 includes, without limitation, one or more of a LIDAR module 202, a radar module 204, a surround camera module 206, an ultrasound module 208, other external-facing sensor modules 210, and/or an external sensor fusion module 220.

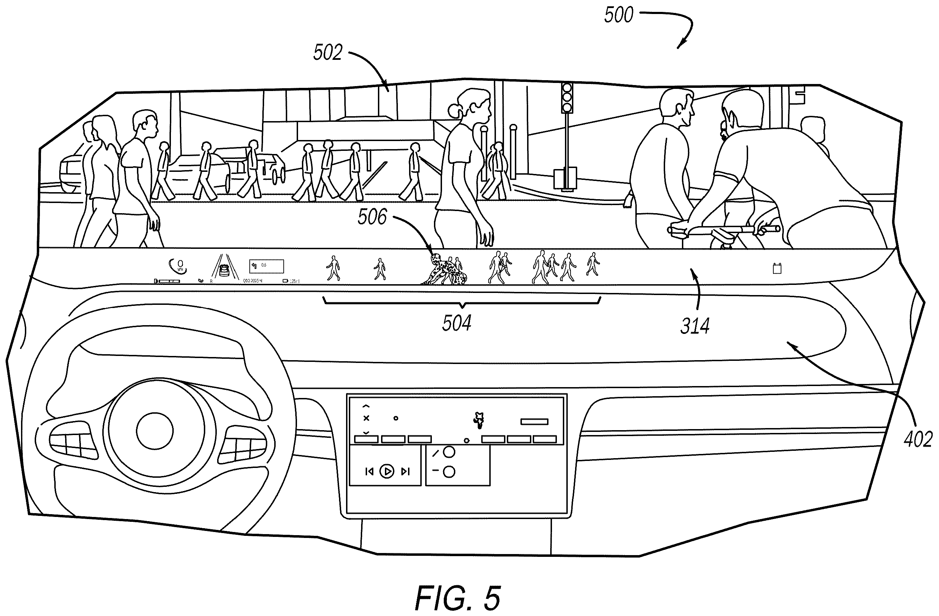

The LIDAR module 202 includes LIDAR sensors and associated processing circuitry that detects objects in an environment (e.g., an environment 502 as shown in FIG. 5) associated with the vehicle 102 and measures the distance between the objects and the vehicle 102. The LIDAR module 202 illuminates a target object with an optical pulse signal and measures the characteristics of the return signal reflected off the object. The radar module 204 includes radar sensors and associated processing circuitry that detects the speed of objects in the environment 502 associated with the vehicle 102 and measures the distance between the objects and the vehicle 102. The radar module 204 transmits radio waves towards a target object, where the radio waves strike and reflect off the object. The radar module 204 measures the characteristics of the return signal reflected off the object.

The surround camera module 206 includes surround view cameras and associated processing circuitry that detects objects in the environment 502 associated with the vehicle 102 and measures the distance between the objects and the vehicle 102. The surround camera module 206 captures images at various points or locations around the perimeter of the vehicle 102. The surround camera module 206 stitches the images together and analyzes the images to estimate the location various objects illustrated in the images are from the vehicle 102 and estimates the distance between the objects and the vehicle 102. The ultrasound module 208 includes ultrasound sensors and associated processing circuitry that detects objects in the environment 502 associated with the vehicle 102 and measures the distance between the objects and the vehicle 102. The ultrasound module 208 transmits sound waves towards a target object, where the sound waves strike and reflect off the object. The ultrasound module 208 measures the characteristics of the return signal reflected off the object. Other external-facing sensor modules 210 include various additional sensors and associated processing circuitry that detects objects in the environment and measures the distance between the objects and the vehicle 102. Non-limiting examples of the external-facing sensor modules 210 can include thermal imaging sensors and/or night vision sensors, among others.

The external sensor fusion module 220 integrates the output of one or more of the LIDAR module 202, the radar module 204, the surround camera module 206, the ultrasound module 208, and/or the other external-facing sensor modules 210. In so doing, the external fusion module 220 determines the types, locations, and/or speeds of external conditions, such as potentially hazardous conditions, relevant to the vehicle 102, such as other road users (e.g., pedestrians, bicyclists, motorcyclists, and other vehicles), landmarks (e.g., traffic lights and buildings), the signal color and pedestrian indicator on detected traffic lights, among others as is described herein.

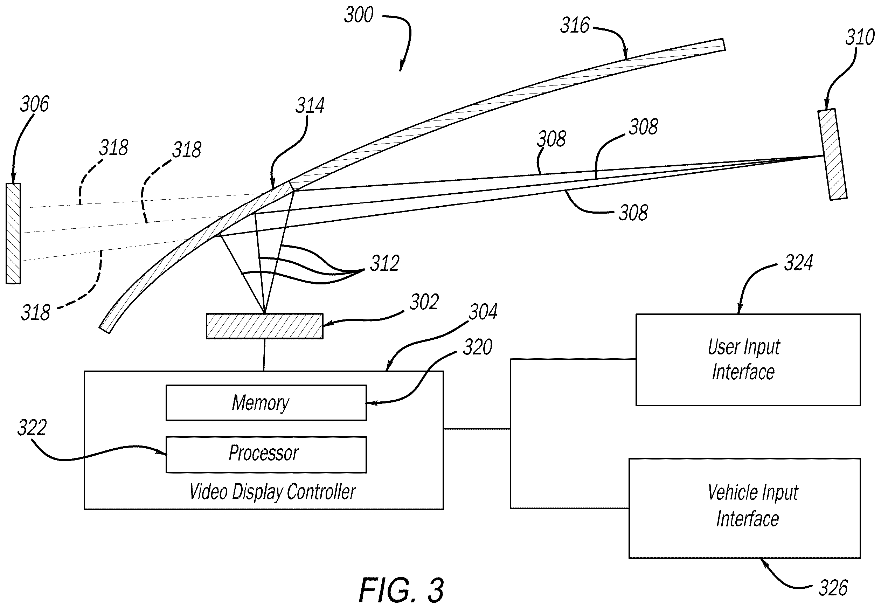

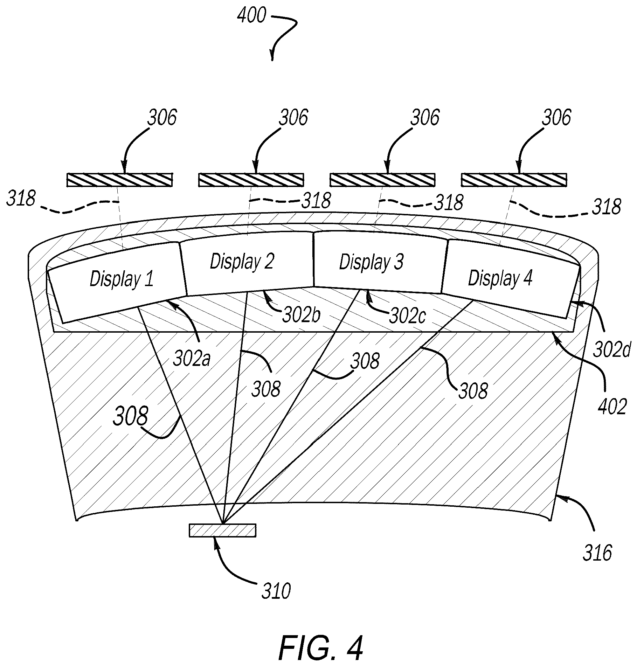

Referring to FIG. 3, an example display system 300 is shown and generally includes one or more display units 302 (e.g., a plurality of display units 302a-302d as shown in FIG. 4) and a video display controller 304. In some examples, the display system 300 is implemented within the vehicle 102 to project content 306 (e.g., images, text, etc. related to the external condition(s)) perceivable by a user 104 (e.g., also embodied as a driver as shown in FIG. 1). It is understood that the projected content 306 being perceivable in one or more embodiments means that the projected content 306 can be understood or reasonably interpreted by the user 104 (e.g., displayed in an orientation that is readable by the user 104 viewing a windshield of the vehicle 102). It is also understood that the user 104 can be a human operator of the vehicle 102, a passenger of the vehicle 102, or any other person associated with the operation and/or occupant of the vehicle 102. It should be understood, however, that the display system 300 can be implemented within any general system wherein content may be projected to the user 104, such as a theater or classroom setting and is not limited to the examples described herein. In one or more examples, the projected content 306 can appear within an optical path 308 that originates from an eyebox 310 of the user 104 and represents at least a portion of a viewable range of the user 104. It is understood that the optical path 308 may vary based on the height of the eyebox 310 of the user 104 that can correspond (e.g., directly/indirectly) to a height of the user 104.

In one or more examples, one or more images are projected as a first light path 312 against a portion 314 (e.g., a display portion) of a surface 316 from the one or more display units 302. With particular reference to FIG. 4, an example system 400, in one or more embodiments, illustrates an implementation of the plurality of display units 302a-302d positioned over and along a dashboard 402 of the vehicle 102. It is understood, however, that the plurality of display units 302a-302d can be integrated within the dashboard 402 as well. It is also understood that the example system 400, in one or more embodiments, can implement a single display unit (not shown) that spans the entirety of the dashboard 402.

Referring back to FIG. 3, and as is depicted in FIG. 4, the surface 316 is a windshield of the vehicle 102. However, it is understood that the surface 316 can be any surface upon which content can be projected. As another example, the portion 314 of the surface 316 is a solid color-blocked band near an edge of the surface 316 (e.g., along a bottom of the windshield) that may gradually dissolve into minimally-sized dots (e.g., a frit). As yet another example, the portion 314 of the surface 316 can be a painted enamel that can be any color. However, it is understood that the portion 314 of the surface 316 can be colored with any type of paint, material, or process. As a further example, and because the portion 314 of the surface 316 causes the projected one or more images to be reflected, an inversion of the projected one or more images occurs and causes the projected one or more images to be displayed so that the projected content 306 is perceivable to the user 104 (e.g., viewable in the correct orientation). In one or more embodiments, the inverted form of the projected one or more images is represented by a second light path 318. In one or more examples, the projected content 306 displays a real-time visual overlay (e.g., a real-time visual overlay 504 as shown in FIG. 5) of the environment 502, as is described herein.

In one or more embodiments, the video display controller 304 includes a memory 320 and a processor 322, wherein the processor 322 is configured to execute one or more instructions stored in the memory 320 to control an output of the display unit 302. It is understood that the processor 322 can represent an application specific integrated circuit (ASIC), a field programmable gate array and/or a system on chip that can contain one or more interfaces including, but not limited to, a video interface, an audio interface, and/or any other interface related to a processing capability associated with the vehicle 102. It is also understood that the processor 322 can represent any other processing integrated circuit. The video display controller 304 may control the display unit 302, and thereby cause the display unit 302 to project particular images and/or other data (or any content) based on the one or more instructions stored in the memory 320 and/or based on other inputs from the user 104. For example, a user input interface 324 and a vehicle input interface 326 may be used to provide one or more instructions to the video display controller 304 to control the display unit 302 based on user input (e.g., input from the user 104) and vehicle data/status, respectively. For example, user input to change a type of information displayed (e.g., to select between instrument data such as speed/RPM/etc. and navigation data such as turn directions), to select options when a graphical user interface is displayed, and/or to otherwise indicate preferences of the user 104 are provided to the video display controller 304 and processed to alter a content, height, and/or format of the displayed data. As an example, the content may be data (e.g., music files, video files, recorded sound waves, etc.). It is understood that the user input interface 324, in some examples, receives user input from any suitable user input device, including but not limited to a touch screen, vehicle-mounted actuators (e.g., buttons, switches, knobs, dials, etc.), a microphone (e.g., for voice commands), an external device (e.g., a mobile device of a vehicle occupant), and/or other user input devices.

The vehicle input interface 326 receives data from one or more vehicle sensors (not shown) and/or systems indicating a vehicle status and/or other vehicle data, which may be sent to the video display controller 304 to adjust content and/or format of the displayed data, in one or more embodiments. For example, a current speed may be supplied (e.g., via a controller-area network (CAN) bus of the vehicle 102) to the vehicle input interface 326 and sent to the video display controller 304 to update the display of a current speed of the vehicle 102. The vehicle input interface 326 may also receive input from a navigation module (not shown) of the vehicle 102 and/or other information sources within the vehicle 102.

FIG. 5 is an example embodiment of a cross-traffic alert system 500 that is configured to be displayed (e.g., projected) on the portion 314 of the surface 316 as well as dynamically adapt to, for example, real-time traffic and/or environmental conditions. In one or more examples, the cross-traffic alert system 500 is configured to combine one or more visualization technologies and/or situational awareness systems. It is understood that an implementation of the combined one or more visualization technologies and/or situational awareness systems provide enhanced safety features to the user 104 of the vehicle 102 that correspond to reducing potential vehicle-related accidents (e.g., a collision with one or more objects such as pedestrian(s), cyclist(s), animal(s), or other obstacles).

In one or more embodiments, the cross-traffic alert system 500 utilizes the sensor suite 106 to detect the one or more objects in any environmental-related condition. While the sensor suite 106 may typically rely upon the utilization of the one or more cameras, one or more LIDAR sensors, one or more radar sensors, and/or one or more ultrasonic sensors to detect the one or more objects, the sensor suite 106 can also employ the other external-facing sensor modules 210 in instances wherein it is necessary or desirable for the sensor suite 106 to adapt to various environmental conditions. For example, and in an instance wherein adverse weather and/or low-visibility conditions such as fog and/or rain arises, the sensor suite 106 can employ one or more thermal imaging sensors to identify one or more heat signatures of any of the one or more objects. As another example, and in an instance wherein adverse weather and/or low-visibility conditions such as nighttime arises, the sensor suite 106 can employ one or more enhanced night vision sensors to ensure that any of the one or more objects are visible regardless of darkness inherently associated with nighttime.

In one or more embodiments, the cross-traffic alert system 500 displays a real-time visual overlay 504 of the environment 502 (e.g., on the portion 314 of the surface 316) that corresponds to a field of view of the front sensor suite 106a. However, it is understood that the cross-traffic alert system 500 can also provide a real-time visual overlay 504 of the environment 502 that corresponds to a field of view of the back sensor suite 106b as well any other sensor suite(s) included within a construct of the vehicle 102, such as along the sides of the vehicle 102, for example. In one or more examples, as is illustrated in FIG. 5, the real-time visual overlay 504 of the environment 502 can display a dynamic view of a street crossing that can include any of the one or more detected objects traveling along the street crossing (e.g., graphical representations of the objects). It is understood that the real-time visual overlay 504 can span the entirety of the portion 314 of the surface 316, which corresponds to a similar width to that of a front end of the vehicle 102. In one or more examples, the width of the real-time visual overlay 504 corresponding to the width of the vehicle 102 provides an intuitive, and panoramic, display to the user 104 so that the user 104 can easily identify an exact location of any object of the one or more objects within the field of view of the front sensor suite 106a or any of the sensor suites of the vehicle 102.

In one or more examples related particularly to the illustration provided by FIG. 5, one or more pedestrians can be detected by the front sensor suite 106a and displayed to the user 104 of the vehicle 102 via the portion 314 of the surface 316. It is understood that the front sensor suite 106a is configured to detect the one or more pedestrians traveling by any manner along the street crossing such as, but not limited to, walking, running, biking, among others, with a corresponding visual graphic displayed.

In one or more embodiments, and based on the detection of the one or more objects, the vehicle-side algorithm 110 is configured to assign a priority to each pedestrian of the one or more pedestrians. As an example, the assignment of the priority to each pedestrian of the one or more pedestrians can be based on a proximity of each pedestrian of the one or more pedestrians from the vehicle 102, a speed each pedestrian of the one or more pedestrians are traveling, or combination thereof. As another example, the vehicle-side algorithm 110 is also configured to evaluate a likelihood of contact or collision between the vehicle 102 and a pedestrian of the one or more pedestrians, which can also be utilized as a basis for the assignment of the priority to each pedestrian of the one or more pedestrians. It is understood, however, that any priority-related bases associated with any pedestrian of the one or more pedestrians can be used as a basis for the assignment of the priority to each pedestrian of the one or more pedestrians.

In one or more embodiments, the vehicle-side algorithm 110 is configured to cause any of the detected pedestrians (e.g., or any of the detected objects) to be highlighted in a visible way that is perceivable to the user 104 of the vehicle 102 and different from a neutral color. For example, the neutral color is used to display the pedestrians of the one or more pedestrians so that when a pedestrian is highlighted, that pedestrian easily stands out to the user 104 of the vehicle 102.

In one or more examples, highlighting any of the pedestrians of the one or more pedestrians can be in the form of color-coded visuals indicative of a level of potential contact or threat (e.g., the likelihood of collision) that are displayed to the user 104 of the vehicle 102 via the portion 314 of the surface 316. As an example, one or more colors used in the color-coded visuals can indicate varying levels of threats or potential for contact with the object(s). For example, a red-colored pedestrian can signify imminent danger while a yellow-coded pedestrian can signify a moderate risk of danger. It is understood, however, that any color can be utilized to highlight the pedestrian and for any reason.

As another example, tiers of distance and/or speed-related threshold(s) can be utilized as a basis for the evaluation of the threat level. In one or more examples, the tiers of the distance and/or speed-related threshold(s) correspond to different distances and/or speeds in relation to the vehicle 102 defined by a particular color (e.g., red or yellow). As yet another example, any of the pedestrians can be highlighted based on whether the distance and/or speed-related threshold is met or exceeded. As a further example, the distance-related threshold can be a predefined distance from the vehicle 102 that is acceptable and does not constitute a threat. It is understood that any distance from the vehicle 102 can be considered acceptable. As an additional example, the speed-related threshold can be a predefined speed an object can travel toward the vehicle 102 that is acceptable and does not constitute a threat. It is understood that any speed can be considered acceptable. In one or more examples, a cyclist 506 shown in the real-time visual overlay is highlighted in a particular color associated with the particular tier(s) of the distance and/or speed-related threshold(s) that the cyclist 506 has met or exceeded.

In one or more embodiments, the vehicle-side algorithm 110 is configured to dynamically adjust the color highlighting the pedestrian of the one or more pedestrians in real-time. For example, the vehicle-side algorithm 110 is configured to cause the highlighted pedestrian to change color (e.g., from red to yellow to the neutral color) based on the pedestrian move farther away from the vehicle 102 and/or more slowly toward the vehicle 102.

In one or more embodiments, the vehicle-side algorithm 110 is configured to cause one or more alerts to be transmitted to the user 104 of the vehicle 102. In one or more examples, the one or more alerts can include one or more visual alerts (e.g., one or more written messages on at least the portion 314 of the surface 316), auditory alerts (e.g., emanated from one or more speakers of the vehicle 102), haptic alerts (e.g., one or more vibrations in a steering wheel or seat of the vehicle 102), or a combination thereof, among others. As an example, a frequency and/or tone of the one or more alerts transmitted to the user 104 of the vehicle 102 can correspond to the threat level as determined by the vehicle-side algorithm 110. For example, a high-level (e.g., red color) threat can correspond to quickly repeated sounds and vibrations as well as a written warning displayed on the portion 314 of the surface 316. As another example, a moderate-level (e.g., yellow color) threat can correspond to a more sporadic tone of the sounds and vibrations but can also include a written warning displayed on the portion 314 of the surface 316.

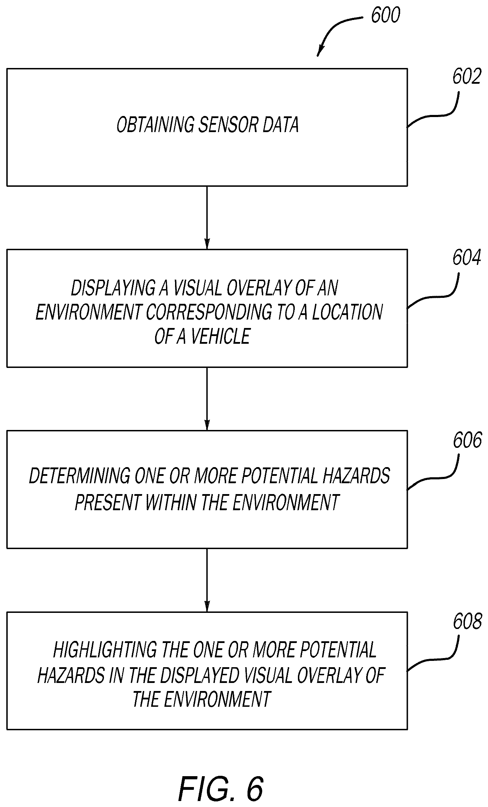

FIG. 6 is a flowchart illustrating an example method 600 for providing a dynamic and adaptable system for monitoring traffic in relation to a location of a vehicle (e.g., the vehicle 102) and generating an alert for display. At operation 602, the vehicle is configured to utilize a vehicle system (e.g., the vehicle-side algorithm 110) to obtain sensor data from one or more sensors of a sensor suite (e.g., the sensor suite 106) associated with the vehicle. In one or more examples, the one or more sensors include one or more LIDAR sensors, one or more radar sensors, one or more ultrasonic sensors, one or more thermal imaging sensors, one or more night vision sensors, or a combination thereof.

At operation 604, the vehicle system is configured to display a visual overlay (e.g., the real-time visual overlay 504) of an environment (e.g., the environment 502) corresponding to the location of the vehicle to a user (e.g., the user 104) of the vehicle. For example, the visual overlay is displayed in response to obtaining the sensor data. At operation 606, the vehicle system is also configured to determine one or more potential hazards present within the environment. As an example, the determination of the one or more potential hazards is based on the sensor data. At operation 608, the vehicle system is further configured to generate an alert, for example highlight the one or more potential hazards in the displayed visual overlay of the environment, such as based on the threat level. For example, the highlighting of the one or more potential hazards is based on determining that there are one or more potential hazards present within the environment.

In one or more embodiments, the vehicle system is also configured to select a sensor of the one or more sensors to obtain the sensor data. As an example, the selection of the sensor of the one or more sensors is based on one or more environmental conditions associated with the location of the vehicle.

In one or more embodiments, the vehicle system is further configured to determine a priority of the one or more potential hazards. For example, the determination of the priority of the one or more potential hazards is based on a proximity of the one or more potential hazards from the location of the vehicle, a speed of the one or more potential hazards in relation to the location of the vehicle, or a combination thereof. In one or more examples, the determination of the priority of the one or more potential hazards includes determining a likelihood of collision between the vehicle and the one or more potential hazards based on one or more tiers of distance-related thresholds or speed-related thresholds. As another example, highlighting the one or more potential hazards in the displayed visual overlay of the environment is further based on the one or more potential hazards exceeding the one or more tiers of distance-related thresholds and/or speed-related thresholds. As yet another example, a first tier of the one or more tiers of distance-related thresholds and/or speed-related thresholds corresponds to a first color and a second tier of the one or more tiers of distance-related thresholds and/or speed-related thresholds corresponds to a second color.

In one or more embodiments, the vehicle system is further configured to transmit one or more alerts in response to determining that the one or more potential hazards are present within the environment. As an example, the one or more alerts include one or more visual alerts, one or more auditory alerts, one or more haptic alerts, or a combination thereof.

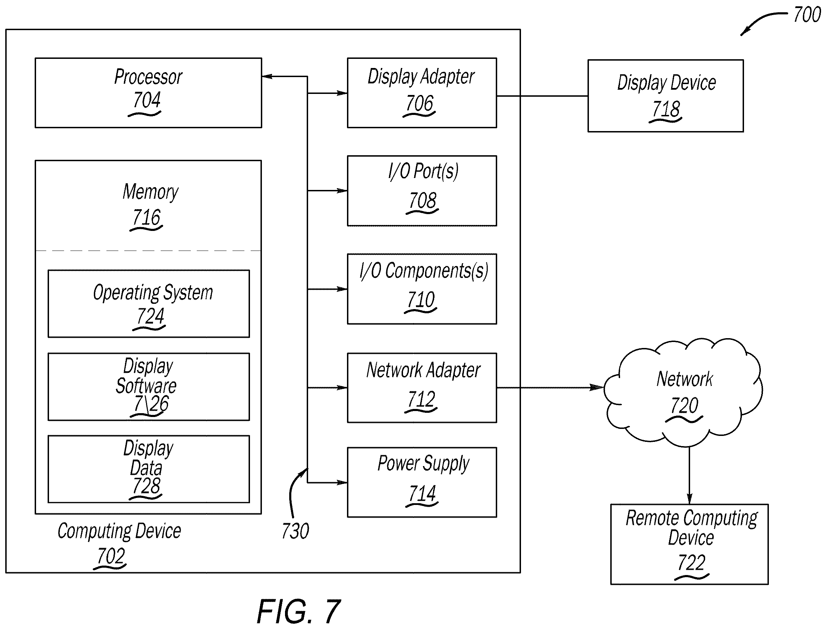

FIG. 7 illustrates an operating environment, such as a computer system, that facilitates the performance of one or more systems and methods described herein. More specifically, the systems and methods described herein can be implemented using a computing device 702. For example, the computing device 702 can be a personal computer, a desktop, a laptop, a tablet, a hand-held computer, a server, a workstation, a mainframe, a wearable computer, a supercomputer, or a combination thereof. However, it is understood that the aforementioned examples of the computing device 702 is non-exhaustive and the computing device 702 can be any type of processing or computing device. The computing device 702 generally includes a processor 704, a display adapter 706, one or more input/output port(s) 708, one or more input/output component(s) 710, a network adapter 712, a power supply 714, and a memory 716. However, it is understood that the computing device 702 can include any additional components therein and is not required to include any of the listed components (e.g., the processor 704, the display adapter 706, the one or more input/output port(s) 708, the one or more input/output component(s) 710, the network adapter 712, the power supply 714, and the memory 716).

The processor 704 is configured to provide instructions to the computing device 702 so that the computing device 702 can process one or more tasks including the implementation of a software program to perform one or more operations as described in more detail herein. It is also understood that the computing device 702 may include any number or processors 704 therein. The display adapter 706 can be a graphics card or a video board that provides the computing device 702 with a capability to display content on a display device 718. For example, the display device 718 can be any screen, monitor, and/or light-emitting component associated with any of the personal computer, the desktop, the laptop, the tablet, the hand-held computer, the server, the workstation, the mainframe, the wearable computer, the supercomputer, or a combination thereof. However, it is understood that the aforementioned examples of the display device 718 is non-exhaustive and that the display device 718 can be any type of device capable of providing a visual display.

The input/output port(s) 708 provide a number of interfaces (e.g., sockets) for one or more cables to connect to the computing device 702. It is understood that there may be any number of input/output port(s) 708 on the computing device 702. For example, the input/output port(s) 708 enables the computing device 702 to receive signals and/or data from an external device connected to the computing device 702 via the one or more cables. As another example, the input/output port(s) 708 enable the computing device 702 to send signals and/or data to an external device connected to the computing device 702 via the one or more cables. The input/output component(s) 710 can include one or more components that support the input/output port(s) 708 such as, but not limited to, a switch, a push button, a pressure mat, a float switch, a keypad, a radio receive, or a combination thereof.

The network adapter 712 can be any type of network interface controller enables communication over a network 720 with another computing device, such as a remote computing device 722. For example, the remote computing device 722 can be a user device such as a cellular-phone, a smartphone, a tablet, a laptop, or a combination thereof. The power supply 714 is configured to convert alternating high voltage current (e.g., AC) into direct current (e.g., DC) to provide power to the other components (e.g., the processor 704, the display adapter 706, the one or more input/output port(s) 708, the one or more input/output component(s) 710, the network adapter 712, and the memory 716) of the computing device 702.

Additionally, the memory 716 can be a mass storage device and/or a system memory such as a hard disk drive, a memory card, a solid-state drive, RAM, or a combination thereof. The memory 716 is configured to provide storage for instructions and data associated with the operation of the computing device 702. The memory 716 can generally include an operating system 724, display software 726, and display data 728 to perform one or more operations described in more detail herein. For example, the operating system 724 is configured to manage and/or process any of the data and/or instructions associated with the display software 726 and/or the display data 728, as described in more detail herein.

Furthermore, a system bus 730 is also included within the computing device 702 that is configured to couple each of the various components (e.g., the processor 704, the display adapter 706, the one or more input/output port(s) 708, the one or more input/output component(s) 710, the network adapter 712, the power supply 714, and the memory 716) of the computing device 702. It is also understood that each of the components of the computing device 702, and the functionality associated with each of the components of the computing device 702, may be implemented within the remote computing device 722. While the operating environment illustrated within FIG. 7 depicts a particular configuration associated with at least the computing device 702, the network 720, and the remote computing device 722, it is understood that the operating environment may be configured in any way.

Thus, one or more examples of the present disclosure provide a system for detecting one or more potential hazards in relation to a location of the vehicle by monitoring traffic around the location of the vehicle and implementing a vehicle-side algorithm to highlight any of the potential hazards that meet or exceed a threshold, as is described herein.

Unless otherwise expressly indicated herein, all numerical values indicating mechanical/thermal properties, compositional percentages, dimensions and/or tolerances, or other characteristics are to be understood as modified by the word "about" or "approximately" in describing the scope of the present disclosure. This modification is desired for various reasons including industrial practice, material, manufacturing, and assembly tolerances, and testing capability.

As used herein, the phrase at least one of A, B, and C should be construed to mean a logical (A OR B OR C), using a non-exclusive logical OR, and should not be construed to mean "at least one of A, at least one of B, and at least one of C."

In this application, the term "controller" and/or "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The term memory is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general-purpose computer to execute one or more particular functions embodied in computer programs. The functional blocks, flowchart components, and other elements described above serve as software specifications, which can be translated into the computer programs by the routine work of a skilled technician or programmer.

The description of the disclosure is merely exemplary in nature and, thus, variations that do not depart from the substance of the disclosure are intended to be within the scope of the disclosure. Such variations are not to be regarded as a departure from the spirit and scope of the disclosure.

## Claims

1. A method comprising:
obtaining sensor data from one or more sensors of a sensor suite associated with a vehicle;
displaying, in response to obtaining the sensor data, a visual overlay of an environment corresponding to a location of the vehicle;
determining, by a vehicle-side algorithm, one or more potential hazards present within the environment based on the sensor data; and
highlighting, by the vehicle-side algorithm, the one or more potential hazards in the displayed visual overlay of the environment based on determining that there are one or more potential hazards present within the environment.

2. The method of claim 1, wherein the one or more sensors include one or more LIDAR sensors, one or more radar sensors, one or more ultrasonic sensors, one or more thermal imaging sensors, one or more night vision sensors, or a combination thereof.

3. The method of claim 1 or 2, further comprising:
selecting a sensor of the one or more sensors to obtain the sensor data based on one or more environmental conditions associated with the location of the vehicle.

4. The method of any preceding claim, further comprising:
determining a priority of the one or more potential hazards based on a proximity of the one or more potential hazards from the location of the vehicle, a speed of the one or more potential hazards in relation to the location of the vehicle, or a combination thereof.

5. The method of claim 4, wherein determining the priority of the one or more potential hazards further comprises:
determining a likelihood of collision between the vehicle and the one or more potential hazards based on one or more tiers of distance-related thresholds or speed-related thresholds.

6. The method of claim 5, wherein highlighting the one or more potential hazards in the displayed visual overlay of the environment is further based on the one or more potential hazards exceeding the one or more tiers of distance-related thresholds or speed-related thresholds.

7. The method of claim 5 or 6, wherein a first tier of the one or more tiers of distance-related thresholds or speed-related thresholds corresponds to a first color and a second tier of the one or more tiers of distance-related thresholds or speed-related thresholds corresponds to a second color.

8. The method of any preceding claim, further comprising:
transmitting one or more alerts in response to determining that the one or more potential hazards are present within the environment, wherein the one or more alerts include one or more visual alerts, one or more auditory alerts, one or more haptic alerts, or a combination thereof.

9. A system comprising:
a processor; and
a non-transitory computer-readable medium including instructions that are executable by the processor, wherein the instructions include:
obtaining sensor data from one or more sensors of a sensor suite associated with a vehicle;
displaying, in response to obtaining the sensor data, a visual overlay of an environment corresponding to a location of the vehicle;
determining, by a vehicle-side algorithm, one or more potential hazards present within the environment based on the sensor data; and
highlighting, by the vehicle-side algorithm, the one or more potential hazards in the displayed visual overlay of the environment based on determining that there are one or more potential hazards present within the environment.

10. The system of claim 9, further being configured to carry out a method as mentioned in any of claims 2 to 8.

11. A system comprising:
a processor; and
a non-transitory computer-readable medium including instructions that are executable by the processor, wherein the instructions include:
selecting a sensor of one or more sensors of a sensor suite associated with a vehicle based on one or more environmental conditions associated with a location of the vehicle;
obtaining sensor data from the sensor;
displaying, in response to obtaining the sensor data, a visual overlay of an environment corresponding to the location of the vehicle;
determining, by a vehicle-side algorithm, one or more potential hazards present within the environment based on the sensor data;
highlighting, by the vehicle-side algorithm, the one or more potential hazards in the displayed visual overlay of the environment based on determining that there are one or more potential hazards present within the environment; and
transmitting one or more alerts in response to determining that the one or more potential hazards are present within the environment, wherein the one or more alerts include one or more visual alerts, one or more auditory alerts, one or more haptic alerts, or a combination thereof.

12. The system of claim 11, wherein the instructions further include:
determining a priority of the one or more potential hazards based on a proximity of the one or more potential hazards from the location of the vehicle, a speed of the one or more potential hazards in relation to the location of the vehicle, or a combination thereof.

13. The system of claim 12, wherein determining the priority of the one or more potential hazards further includes:
determining a likelihood of collision between the vehicle and the one or more potential hazards based on one or more tiers of distance-related thresholds or speed-related thresholds.

14. The system of claim 13, wherein highlighting the one or more potential hazards in the displayed visual overlay of the environment is further based on the one or more potential hazards exceeding the one or more tiers of distance-related thresholds or speed-related thresholds.
